# EUROPÄISCHE PATENTSCHRIFT

(11) **EP 0 751 059 B1**
(45) Veröffentlichungstag und Bekanntmachung des Hinweises auf die Patenterteilung: **05.02.1997**
(21) Anmeldenummer: 95109688.2
(22) Anmeldetag: 22.06.1995
(51) Int. Cl.: B62D 5/083, B25B 27/02

(54) **Verfahren und Vorrichtung zur Montage eines Servoventils**
Method and device for assembling a power assisted steering valve
Procédé et dispositif de montage pour soupape de direction assistée

(43) Veröffentlichungstag der Anmeldung: 02.01.1997
(73) Patentinhaber: TRW Fahrwerksysteme GmbH & Co. KG, 40547 Düsseldorf (DE)
(72) Erfinder: Pfeifer, Arnd Dipl.-Ing., D-47877 Willich (DE)
(74) Vertreter: Stenger, Watzke & Ring Patentanwälte

(56) Entgegenhaltungen:
- EP-A- 0 468 659
- EP-A- 0 628 466
- AU-B- 506 036
- GB-A- 2 258 197
- PATENT ABSTRACTS OF JAPAN vol. 4 no. 114 (M-026) ,15.August 1980 & JP-A-55 072461 (KOYO JIDOKI) 31.Mai 1980,

## Beschreibung

Die Erfindung betrifft ein Verfahren zur Montage eines Servoventils, bestehend aus einer Eingangswelle, einer Ausgangswelle und einer die Eingangswelle umgebenden Ventilhülse, in einer hydraulisch zentrierten Position. Weiterhin betrifft die Erfindung eine Vorrichtung zur Durchführung des Verfahrens.

Servoventile der genannten Art werden insbesondere in Servolenk-Systemen eingesetzt. Eine mit einer Lenkstange verbundene Eingangswelle wirkt hydraulisch mit einer sie umgebenden Ventilhülse zusammen, die ihrerseits mit einer mit einem Ritzel versehenen Ausgangswelle verbunden ist. Das Ritzel wirkt auf die Zahnstange einer Lenkung. Von einer Pumpe wird Hydraulikflüssigkeit unter Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt.

Herkömmliche Servolenk-Ventile können zur Verbindung von Eingangswelle und Ausgangswelle einen Torsionsstab aufweisen, welcher als stabförmiges Federelement mit einem Ende an der Eingangswelle und dem anderen Ende an der Ausgangswelle befestigt ist. Neuartige Servoventile müssen einen Torsionsstab nicht mehr zwingend aufweisen, sofern sie zwischen der Eingangswelle und der Ventilhülse eine Reaktionsvorrichtung aufweisen, die eine radial wirkende Kraft ausübt.

In jedem Fall ist von besonderer Bedeutung, daß die einzelnen Bauelemente des Servoventils nicht nur mechanisch miteinander verbunden werden, sondern daß insbesondere die Ventilhülse und die Eingangswelle zueinander in einer hydraulisch zentrierten Position montiert werden. Wäre dies nicht der Fall, würden sich die Eingangswelle und die Ventilhülse in einer relativ zueinander verdrehten Position befinden, was einer ständigen Verdrehung in einer Lenkausschlagsrichtung entspricht.

Ursprünglich wurde das Servoventil fertigmontiert, wobei jedoch die Eingangswelle relativ zum Torsionsstab noch verdreht werden konnte. Die Eingangswelle wurde dann bis zum Erreichen einer hydraulisch zentrierten Position verdreht und schließlich eine die Eingangswelle und den Torsionsstab durchdringende Bohrung ausgeführt, in welche zur verdrehstarren Verbindung von Eingangswelle und Torsionsstab ein Bolzen eingesetzt wurde. Hier ergaben sich einerseits Abdichtungsprobleme, da die von Hydraulikmittel durchflossene hohle Eingangswelle an ihrem freien Ende gesondert abgedichtet werden mußte, andererseits ergaben sich Probleme beim Fixieren der relativ zueinander verdrehbaren Bauteile zum Ausführen der Bohrung.

Man ist daher später dazu übergegangen, die Verbindung zwischen Eingangswelle und Torsionsstab durch eine Rändelung verdrehfest zu machen und die Baugruppe bestehend aus Eingangswelle, Ausgangswelle und Torsionsstab fertig vorzumontieren. Weiterhin wurde die Ventilhülse auf die Ausgangswelle aufgesetzt und mit einer Gewindebohrung versehen, in welche eine Exzenterschraube eingesetzt wird. Durch Drehen der Exzenterschraube kann die Ventilhülse relativ zur Ausgangswelle verdreht werden, bis das Servoventil eine hydraulisch zentrierte Einstellung erreicht. Dann wird die Exzenterschraube fixiert. Zum Fixieren wird das Gewinde verstemmt und gegebenenfalls ein zusätzliches aushärtendes Haftmittel verwendet. Diese Vorgehensweise hat eine Reihe von Nachteilen. Schwierig ist die Gewindesicherung, denn einerseits soll die Exzenterschraube zur Einstellung verdrehbar sein, andererseits soll durch die Gewindeverstemmung ein weiteres Verdrehen möglichst ausgeschlossen werden. Darüber hinaus ist als zusätzlicher Arbeitsgang das Anordnen der Gewindebohrung erforderlich. Als zusätzliches Bauteil muß eine Exzenterschraube verwendet werden, die in der Herstellung sehr aufwendig ist. Die Verwendung einer Exzenterschraube ermöglicht nur einen sehr kleinen Einstellbereich, wobei darüber hinaus die Exzenterschraube auch bei dem unter Hydraulikdruck stehenden Servoventil zugänglich sein muß, um die Einstellung ausführen zu können. Daraus ergeben sich verfahrens- und anordnungsseitig eine Reihe von Komplikationen. Dadurch erfordert der abschließende Montagevorgang der hydraulischen Zentrierung sehr viel Zeit und stellt hohe Anforderungen an das Personal.

Ein gattungsgemäßes Verfahren zur Montage eines Servoventils ist aus der AU-B-506036 bekannt. Diese Druckschrift offenbart ein Verfahren mit den Schritten:
a) Bilden einer vormontierten Einheit aus Ausgangswelle und Eingangswelle,
b) Einspannen der Ventilhülse in einer drehbeweglichen aber in Axialrichtung fixierten Position,
c) Einsetzen der vormontierten Einheit in die Ventilhülse, wobei die vormontierte Einheit drehfest so positioniert ist, daß die Ventilhülse und die Ausgangswelle gegeneinander verdrehbar aneinanderliegen,
d) Beaufschlagen des vormontierten Servoventils mit Hydraulikdruck,
e) Zentrieren des Servoventils durch Verdrehen der Ventilhülse und
f) Befestigen der vormontierten Einheit mit der Ventilhülse.

Dabei wird der Torsionsstab an einem Ende mit der Eingangswelle versplintet und an dem anderen Ende mit einem Zwischenhülsenelement durch eine Verzahnung verbunden. Das Hülsenelement ist gegenüber einer Stirnfläche der Ausgangswelle in beiden Richtungen verdrehbar. Bis zur abschließenden Fixierung bilden somit die Ausgangswelle und die Eingangswelle keine festmontierte Einheit. Das Hülsenelement ist weiterhin zur Verbindung mit der Ventilhülse vorgesehen, welche im Bereich der Vormontage relativ zu diesem verdrehbar ist. Die genannten Elemente werden in ein Testgehäuse eingesetzt und durch relatives Verdrehen der Eingangswelle und der Ventilhülse wird die hydraulische Mitte ermittelt. Schließlich werden die Ventilhülse und das Zwischenhülsenelement einerseits und das Zwischenhülsenelement und die Ausgangswelle andererseits relativ zueinander fixiert, so daß keine Verdrehung mehr möglich ist.

Zur Erlangung einer verkürzten Bauweise schlägt die JP-A-55072461 vor, die Ausgangswelle und die Ventilhülse miteinander im Übergangsbereich zu verpressen.

Davon ausgehend liegt der Erfindung die **Aufgabe** zugrunde, ein Verfahren zur Montage eines Servoventils in einer hydraulisch zentrierten Position anzugeben, welches schnell, einfach und sicher ausführbar ist, wobei der wirtschaftliche Aufwand gegenüber herkömmlichen Verfahren verringert werden kann. Darüber hinaus soll eine Vorrichtung zur Durchführung des Verfahrens angegeben werden.

Zur **Lösung** dieser Aufgabe wird ein Verfahren zur Montage eines Servoventils mit einer Ausgangswelle, einer Eingangswelle und einer Ventilhülse in einer hydraulisch zentrierten Position mit folgenden Schritten:
a) Bilden einer vormontierten Einheit aus Ausgangswelle und Eingangswelle,
b) Einspannen der Ventilhülse in einer drehbeweglichen aber in Axialrichtung fixierten Position,
c) Einsetzen der vormontierten Einheit in die Ventilhülse, wobei die vormontierte Einheit drehfest so positioniert ist, daß die Ventilhülse und die Ausgangswelle gegeneinander verdrehbar aneinanderliegen,
d) Beaufschlagen des vormontierten Servoventils mit Hydraulikdruck,
e) Zentrieren des Servoventils durch Verdrehen der Ventilhülse und
f) Befestigen der vormontierten Einheit mit der Ventilhülse,
vorgeschlagen, wobei
beim Einsetzen der vormontierten Einheit diese axial beweglich positioniert ist und daß das Befestigen der vormontierten Einheit mit der Ventilhülse durch Eindrücken in die Ventilhülse geschieht, so daß die Ausgangswelle und die Ventilhülse im Überdeckungsbereich miteinander verpreßt sind.

Verfahrensgemäß kann durch die abschließende Verpressung von Ausgangswelle und Ventilhülse auf die Anordnung eines zusätzlichen Einstellelementes verzichtet werden, wie dies beispielsweise die im Stand der Technik erforderliche, sehr kleine aber hochfeste Schraube darstellt. Das Ventil wird praktisch in einer in Axialrichtung noch nicht fertig montierten Form durch Verdrehen der Bauteile hydraulisch zentriert und im Anschluß daran durch endgültige Zusammensetzung in axialer Richtung durch Verpressen in der jeweils verdrehten Position montiert. Dieses Verfahren macht es nicht erforderlich, daß ein unter Hydraulikdruck stehender Einstellbereich zugänglich ist, da das Verdrehen der außenliegenden Hülse auch mit entsprechenden Hilfsmitteln erfolgen kann. Außerdem sind weder in der Ventilhülse noch im Ritzel schwächende Bohrungen oder Gewinde erforderlich. Auch ist der Montagevorgang mit hydraulischer Zentrierung gegenüber herkömmlichen Verfahren sehr viel schneller ausführbar, da nach Erreichen der zentrierten Position nur noch ein Arbeitsgang erforderlich ist, nämlich die Endmontage durch axiales Zusammenstecken der Bauelemente.

In vorteilhafter Weise wird vorgeschlagen, daß die Ventilhülse in eine exakt steuerbare Verdrehvorrichtung eingespannt wird. Diese Einspannung ermöglicht es, den Montagevorgang auch durch weniger umfassend geschultes Personal ausführen zu lassen. Darüber hinaus wird die Einstellung verbessert. In vorteilhafter Weise wird vorgeschlagen, daß das vormontierte Ventil in einer hydraulisch dichten Kapsel mit Hydraulikdruck beaufschlagt wird. In vorteilhafter Weise wird vorgeschlagen, daß die hydraulisch dichte Kapsel durch die Einspannungsvorrichtungen bei der Vormontage des Ventils gebildet wird. Durch diese Maßnahmen wird die Sicherheit des Montagevorganges verbessert und eine Fehleinstellung beispielsweise durch Leckage vermieden.

In vorteilhafter Weise wird vorgeschlagen, daß die vormontierte Einheit mittels Pressenkraft in die Ventilhülse eingedrückt wird. Dadurch wird die Verwendung herkömmlicher Pressen ermöglicht, was sich unter dem Gesichtspunkt der Wirtschaftlichkeit des Verfahrens und der Arbeitssicherheit vorteilhaft auswirkt.

Verfahrensseitig wird weiterhin vorgeschlagen, daß bei der Bildung der vormontierten Einheit die Ausgangswelle und die Eingangswelle mit einem Torsionsstab verbunden werden.

Das erfindungsgemäße Verfahren ermöglicht neben dem Einsatz herkömmlicher Fertigungsvorrichtungen wie beispielsweise herkömmlicher Pressen auch die Montage eines neuartigen Ventils, bei welchen die Ventilbauteile ohne zusätzliche Elemente in einer hydraulisch exakt zentrierten Position montiert sind. Zur Erleichterung des Eindrückens der Ausgangswelle in die Ventilhülse können die sich gegenüberliegenden Stirnflächen an der jeweiligen Kante angefast sein, d. h. die Außenkante der Stirnfläche der Ausgangswelle und/oder die Innenkante der Stirnfläche der Ventilhülse können mit einer Fase versehen sein, was ein leichteres Zusammendrücken bewirkt. Weiterhin können die Ausgangswelle und/oder die Ventilhülse zu einer Sicherung gegen Verdrehen im Überdeckungsbereich mit einer Rändelung versehen sein. An dem neuartigen Ventil sind keine zusätzlichen Bearbeitungsvorgänge erforderlich, wie beispielsweise das Anordnen von Bohrungen, Gewindeschneiden, Verstemmen und dergleichen.

Vorrichtungsseitig wird zur **Lösung** der Aufgabe eine Vorrichtung zur Durchführung des Verfahrens angegeben, die eine Haltebuchse zum Einsetzen der Ventilhülse, einen Einstellring zum Aufsetzen auf die Haltebuchse und zum Führen der Ventilhülse, eine Deckelbuchse zur Führung der Ausgangswelle und zum Aufsetzen auf den Einstellring, und einen Stempel zum Aufsetzen auf die Deckelbuchse und zur drehfesten Aufnahme der Ausgangswelle aufweist.

Diese erfindungsgemäße Vorrichtung ermöglicht mit einer geringen Zahl einfacher Bauteile die Durchführung des erfindungsgemäßen Verfahrens. In die Haltebuchse wird die Ventilhülse eingesetzt. Die Buchse begrenzt die Bewegung der Ventilhülse in einer axialen Richtung und weist weiterhin eine Bohrung auf, welche von der später einzusetzenden Eingangswelle durchdrungen wird. Weiterhin ist die Haltebuchse mit Hydraulikbohrungen oder Anschlüssen für Hydraulikleitungen versehen, so daß später das vormontierte Ventil direkt über die Haltebuchse mit Hydraulikdruck beaufschlagt werden kann. In vorteilhafter Weise weist die Haltebuchse eine Radialwellendichtung auf. In axialer Richtung ist die Haltebuchse so dimensioniert, daß die Ventilhülse mit dem mit der Ausgangswelle zu verbindenden Ende über die Haltebuchse hinaus freisteht. Auf die Haltebuchse wird der Einstellring aufgesetzt, welcher mit dem freistehenden Ende der Ventilhülse verdrehfest in Eingriff kommt. Gemäß einem Vorschlag der Erfindung kann der Einstellring zu diesem Zwecke wenigstens eine Klemmschraube aufweisen. Weiterhin können im Einstellring in Axialrichtung verlaufende Nocken ausgebildet sein, die in entsprechende Aussparungen bzw. Nuten in der Ventilhülse eingreifen. Gegenüber der Haltebuchse ist der Einstellring verdrehbar gelagert. Um die Verdrehung exakt ausführen zu können, weist der Einstellring eine Ringhülse auf, welche gemäß einem Vorschlag der Erfindung mittels einer Spindel gegenüber einem Gegenlager verdreht werden kann. Der Spindelkopf weist in vorteilhafter Weise ein Kugelgelenk auf, so daß keine unerwünschten Belastungen während der Verdrehung des Einstellringes und damit der Ventilhülse auftreten. In vorteilhafter Weise weist der Einstellring eine gegenüber der Haltebuchse hydraulisch abdichtende O-Ringdichtung auf.

Verfahrensgemäß wird aus der Eingangswelle und der Ausgangswelle eine vormontierte Einheit gebildet, wozu die Eingangswelle mit der Ausgangswelle zusammengesteckt wird. Anschließend wird über die Ausgangswelle die Deckelbuchse geschoben, welche eine axiale Führung der Ausgangswelle darstellt. Schließlich wird auf das Ende der Ausgangswelle der Stempel aufgesetzt, welcher mit der Ausgangswelle verdrehfest verbunden wird. Dazu eignet sich das mit dem Gewinde versehene Ende der Ausgangswelle. Weiterhin ist der Stempel, welcher auf die Deckelbuchse diese übergreifend aufgesetzt wird, gegenüber der Deckelbuchse verdrehstarr angeordnet. Der Stempel ist somit mit der vormontierten Einheit relativ zur Deckelbuchse axial beweglich, jedoch nicht verdrehbar. Diese Einheit bestehend aus Eingangswelle, Ausgangswelle, Deckelbuchse und Stempel wird anschließend mit der aus Haltebuchse, Ventilhülse und Einstellring gebildeten Einheit verbunden. Dabei wird die Deckelbuchse auf den Einstellring aufgesetzt, wobei gleichzeitig die Eingangswelle die Ventilhülse und damit den Einstellring und die Haltebuchse durchdringend eingesetzt wird. Der Einstellring ist gegenüber der Deckelbuchse verdrehbar. Er ist somit zusammen mit der Ventilhülse verdrehbar zwischen der Haltebuchse und der Deckelbuchse angeordnet. In vorteilhafter Weise kann der Einstellring an seinen Stirnflächen ringförmige Nocken aufweisen, die in entsprechenden Ringnuten in den Stirnflächen der Haltebuchse und/oder der Deckelbuchse laufen. Weiterhin kann auch ein gegenüber der Deckelbuchse abdichtender O-Ring zwischen Einstellring und Deckelbuchse angeordnet sein. Die Deckelbuchse kann gemäß einem Vorschlag der Erfindung eine Radialwellendichtung zur hydraulischen Abdichtung des Innenbereichs aufweisen.

Die Haltebuchse, der Einstellring und die Deckelbuchse werden in Axialrichtung miteinander verbunden, so daß diese sich axial nicht mehr bewegen können. Da der Stempel gegenüber der Deckelbuchse axial beweglich ist, ist mit diesem auch die aus Ausgangswelle und Eingangswelle bestehende Einheit axial beweglich, wodurch also auch die Ausgangswelle relativ zur Ventilhülse axial beweglich ist. Zur axialen Befestigung von Haltebuchse, Einstellring und Deckelbuchse können diese in Axialrichtung durchdringende Bolzen eingesetzt werden, wobei der Einstellring entsprechende Langlöcher aufweist, um eine Verdrehbarkeit zu ermöglichen.

Um den Stempel in Drehrichtung gegenüber der Deckelbuchse festzulegen, kann zwischen beiden beispielsweise eine Paßfeder eingesetzt werden.

Die fertig montierte Vorrichtung kann nun mit Hydraulikdruck beaufschlagt werden, so daß durch Verdrehen des Einstellringes und damit der Ventilhülse das Servoventil hydraulisch zentriert werden kann. Sobald die hydraulische Mitte eingestellt ist, wird auf den Stempel eine Kraft ausgeübt, so daß sich dieser zusammen mit der Einheit bestehend aus Eingangs- und Ausgangswelle axial in Richtung der Deckelbuchse bewegt. Dabei wird die Ausgangswelle in die Ventilhülse eingedrückt. Bauartbedingt werden beide Elemente miteinander verpreßt, so daß das Servoventil hydraulisch zentriert und fertigmontiert ist. Nach Abstellen des Hydraulikdrucks kann die Vorrichtung wieder zerlegt und das fertig montierte Servoventil entnommen werden.

Die erfindungsgemäße Vorrichtung ermöglicht mit einfachen Mitteln und mit geringem Aufwand eine schnelle, sichere und exakte hydraulische Zentrierung des Servoventils. Die Vorrichtung ist zum Einsatz in herkömmlichen Pressen geeignet, um die erforderlichen Axialkräfte aufzubringen und eine ausreichende Axialeinspannung während der Druckbeaufschlagung zu gewährleisten. Die besondere Ausgestaltung des Einstellringes ermöglicht eine Einstellung, ohne daß die druckbeaufschlagten Bereiche zugänglich sein müssen. Insgesamt wird die Arbeitssicherheit erhöht, was auch durch Vermeidung von Leckagen unterstützt wird.

Weitere Vorteile und Merkmale der Erfindung ergeben sich aus der folgenden Beschreibung anhand der Figuren. Dabei zeigen:
- Figur 1: eine Schnittdarstellung durch ein Ausführungsbeispiel einer Montagevorrichtung mit eingesetztem und teilgeschnittenem Servoventil,
- Figur 2: eine Ansicht der in Figur 1 gezeigten Vorrichtung von oben und
- Figur 3: einen Teilschnitt entlang der Linie III-III in Figur 1.

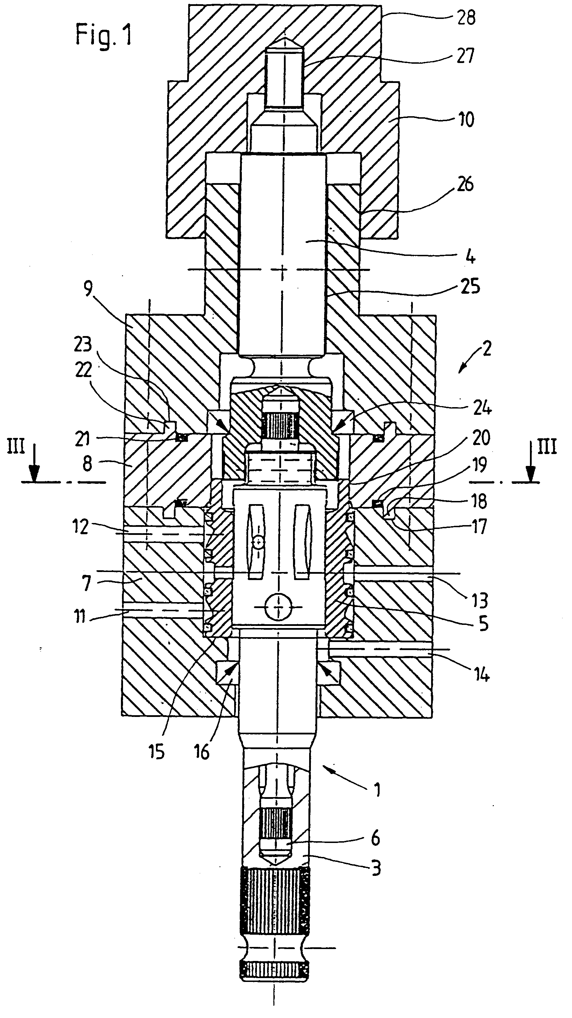

Unter Hinweis auf die Figuren 1 bis 3 wird ein Ausführungsbeispiel für eine Vorrichtung zur Montage eines Servoventils mit hydraulischer Zentrierung erläutert und das Montageverfahren dabei beschrieben.

Gemäß Figur 1 ist das Servoventil 1 in einem vormontierten Zustand in die Montagevorrichtung 2 eingesetzt. Das Servoventil 1 umfaßt im gezeigten Ausführungsbeispiel eine Eingangswelle 3, eine Ausgangswelle 4, eine Ventilhülse 5 und einen Torsionsstab 6. Die Eingangswelle 3 und die Ausgangswelle 4 sind miteinander verbunden. Zwischen ihnen ist der Torsionsstab 6 angeordnet und mit je einem Ende an je einer der beiden Wellen befestigt. Im gezeigten Ausführungsbeispiel weist der Torsionsstab im Bereich seiner Enden dazu eine Rändelung auf. Die Ventilhülse 5 und die Ausgangswelle 4 sind in der in Figur 1 gezeigten Darstellung noch nicht miteinander verbunden. Die beiden Bauteile liegen sich aneinander berührend aneinander, sind aber relativ zueinander verdrehbar.

Montagevorrichtung 2 umfaßt eine Haltebuchse 7, einen Einstellring 8, eine Deckelbuchse 9 und einen Stempel 10. Die Haltebuchse 7 umfaßt Hydraulikbohrungen 11 bis 14. Die Hydraulikbohrung 13 ist der Zulauf, die Hydraulikbohrung 14 der Tankrücklauf. Die Hydraulikbohrungen 11 und 12 dienen zur Ansteuerung der linken bzw. rechten Seite eines nicht gezeigten Stellgliedes und können zur Druckerfassung genutzt werden. Die Haltebuchse 7 bietet der Ventilhülse 5 einen axialen Anschlag 15 in ihrem unteren Bereich und weist eine Radialwellendichtung 16 auf, mit welcher der Buchseninnenraum gegenüber der Außenseite abgedichtet werden kann. Im gezeigten Ausführungsbeispiel weist die Haltebuchse 7 eine Ringnut 17 auf, in welche ein am Einstellring 8 ausgebildeter Ring 18 eingesetzt wird. Die Ventilhülse 5 ist in der Haltebuchse 7 axial fest positioniert, jedoch verdrehbar. Nach dem Einsetzen der Ventilhülse 5 in die Haltebuchse 7 wird der Einstellring 8 auf die Haltebuchse aufgesetzt. Der Einstellring 8 begrenzt die axiale Beweglichkeit der Ventilhülse 5 in die von der Haltebuchse 7 wegweisende Richtung. Weiterhin umgreift der Einstellring 8 den aus der Haltebuchse 7 herausstehenden Bereich der Ventilhülse 5 und ist an diesem Klemmbereich 20 mit der Ventilhülse 5 verdrehfest verbunden. Zwischen der Haltebuchse 7 und dem Einstellring 8 ist eine O-Ringdichtung 19 angeordnet, die in einer Nut des Einstellringes 8 angeordnet ist. Selbstverständlich kann die Nut auch in der Haltebuchse ausgebildet sein. Entsprechend ist auch an der anderen Stirnfläche des Einstellringes eine O-Ringdichtung 21 eingelegt und ein Ring 22 ausgebildet.

Die aus Eingangswelle 3, Ausgangswelle 4 und Torsionsstab 6 bestehende vormontierte Einheit ist ihrerseits in die Deckelbuchse 9 eingesetzt. Die Ausgangswelle 4 ist mit ihrem Ende im Befestigungsbereich 27 im Stempel 10 befestigt, welcher im Überdeckungsbereich 26 die Deckelbuchse übergreift. Im Überdeckungsbereich 26 kann beispielsweise eine Paßfeder angeordnet sein, so daß eine Verdrehung zwischen Deckelbuchse 9 und Stempel 10 verhindert wird.

Andererseits ist jedoch der Stempel 10 relativ zur Deckelbuchse 9 axial beweglich. Mit dem Stempel 10 ist auch die Ausgangswelle 4 axial beweglich, die im Führungsbereich 25 der Deckelbuchse 9 geführt ist. Die Deckelbuchse 9 weist eine Radialwellendichtung 24 auf, um den Buchsenbereich gegenüber dem an der Außenseite anliegenden Hydraulikdruck abzudichten. Die vormontierte Einheit wird mit aufgesetzter Deckelbuchse und aufgesetztem Stempel schließlich in die aus Ventilhülse 5, Haltebuchse 7 und Einstellring 8 gebildete Einheit eingesetzt. Dabei ergibt sich die in Figur 1 gezeigte Positionierung. Die Ventilhülse 5 ist zwischen Haltebuchse und Einstellring verdrehbar aber axial unbeweglich eingesetzt. Die Einheit bestehend aus Eingangswelle 3, Ausgangswelle 4 und Torsionsstab 6 ist in der Deckelbuchse 9 zusammen mit dem Stempel 10 axial beweglich aber aufgrund der Ausbildung des Überdeckungsbereiches 26 zwischen Deckelbuchse 9 und Stempel 10 unverdrehbar angeordnet. Es kann also zusammen mit dem Einstellring 8 die Ventilhülse relativ zur Eingangswelle verdreht werden, während die Eingangswelle 3 zusammen mit der Ausgangswelle 4 und dem Torsionsstab 6 nur axial beweglich ist. Nach Druckbeaufschlagung kann durch Einstellen des Einstellringes die hydraulische Zentrierung zwischen Ventilhülse und Eingangswelle erfolgen. Sobald die Bauteile hydraulisch zentriert sind, kann auf den Stempel 10, welcher im oberen Bereich eine Schlüsselweite 28 aufweist, ein axial wirkender Druck ausgeübt werden, wodurch sich der Stempel 10 zusammen mit der Ausgangswelle 4 und der damit befestigten Eingangswelle 3 und dem dazwischenliegenden Torsionsstab 6 axial bewegt. Die Ausgangswelle 4 wird dann im Klemmbereich 20 in die Ventilhülse 5 eingedrückt. Die beiden Bauelemente können im Bereich ihrer Stirnflächen angefast sein, was das Zusammendrücken unterstützt. Weiterhin können die beiden Elemente durch Rändelungen und dergleichen verdrehfest ausgebildet werden. Die Verbindung zwischen Ausgangswelle 4 und Ventilhülse 5 erfolgt durch die Verpressung im Klemmbereich 20. Die Teile sind nach Herstellen der Verbindung nicht mehr gegeneinander verdrehbar. Nach Abstellen des Hydraulikdrucks läßt sich die Vorrichtung zerlegen und das zentrierte Servoventil entnehmen.

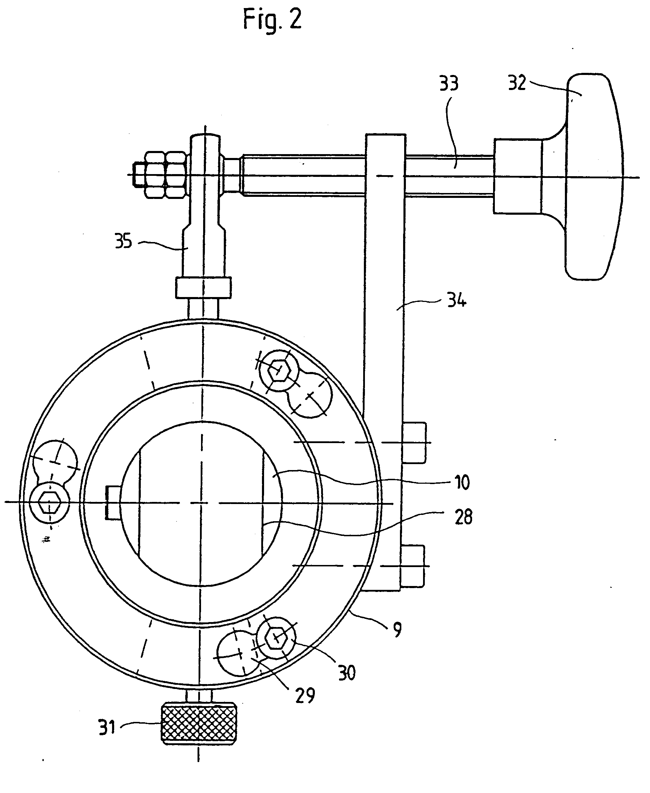

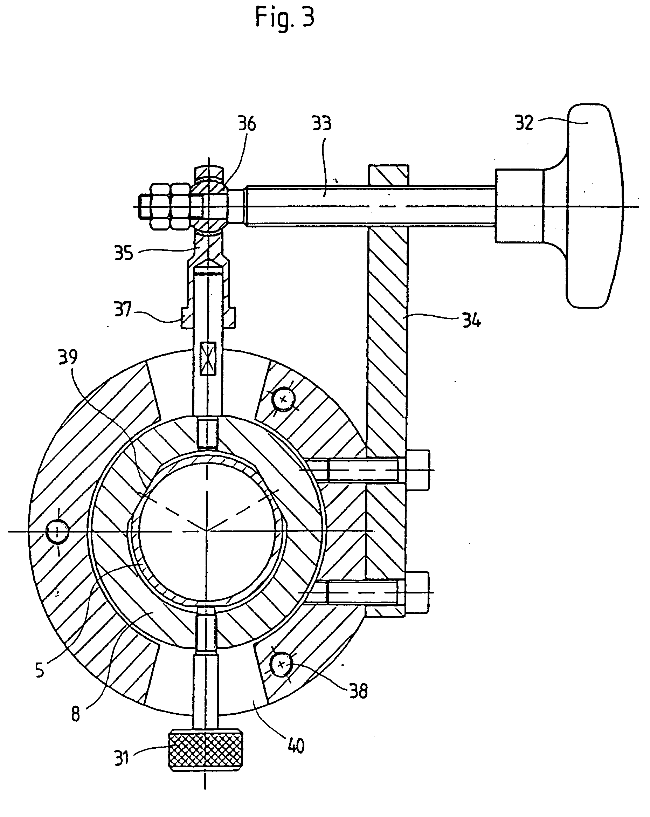

Die Verbindung zwischen der Deckelbuchse 9 und der Haltebuchse 7 erfolgt durch Bolzen, welche in Figur 2 gezeigt sind. Die Bolzen 30 werden in die Haltebuchse 7 eingeschraubt und durchdringen im Einstellring angeordnete Langlöcher. Auch kann der Einstellring eine Ringhülse aufweisen oder in eine entsprechend ausgebildete Haltebuchse eingesetzt sein. Dies ist in Figur 3 gezeigt, wo die Bohrungen 38 für die Verbindungsbolzen in einem Führungsring gezeigt sind, wobei der Einstellring 8 durch den inneren Ring gebildet wird.

Die in die Haltebuchse eingeschraubten Bolzen 30 durchgreifen beim Aufsetzen der Deckelbuchse 9 in dieser ausgebildete Doppelbohrungen 29. Durch einfaches Verdrehen der Deckelbuchse 9 gegenüber dem Einstellring 21 kann dann die axiale Befestigung mittels der Bolzen 30 erfolgen. Diese Anordnung eines Bajonettverschlusses ermöglicht ein schnelles Bearbeiten von Servoventilen.

In der Figur 2 ist die Ausbildung der Doppelbohrungen 29 in der Deckelbuchse 9 gezeigt. Der Stempel 10 weist an seinem oberen Ende eine Schlüsselweite 28 auf und ist hier mit einer herkömmlichen Presse verbindbar. Die Figuren 2 und 3 zeigen auch die Details des Einstellringes, bei welchem zunächst mit einer Klemmschraube 31 der Einstellring relativ zur Ventilhülse 5 verdrehfest fixiert wird. Zweckmäßigerweise kann der Einstellring Klemmnocken 39 aufweisen, die im gezeigten Ausführungsbeispiel Sekantenverlauf haben, und die mit einem entsprechenden Konturverlauf der Ventilhülsenaußenfläche zusammenwirken. Durch die Klemmschraube 31 wird eine relative Verdrehung zwischen Ventilhülse 5 und Einstellring 8 vermieden. Eine Verdrehung des Einstellringes 8 gegenüber der Haltebuchse 7 erfolgt durch Betätigung des Stellgriffs 32, welcher über eine Spindel 33, die an einer Halterung 34 gegengelagert ist, einen Hebel 35 betätigt, über welchen der Einstellring verdreht wird. Zwischen der Spindel 33 und dem Hebel 37 ist ein Kugelgelenk 36 ausgebildet. Der Hebel 35 ist seinerseits mit einem Gelenk 37 versehen. Der Hebel 35 kann somit über den Einstellbereich 40 bewegt werden, ohne daß sich irgendwelche unerwünschten Kräfte auswirken können. Die Halterung 34 ist im gezeigten Ausführungsbeispiel mit Bolzen frei vom verdrehbaren Einstellring 8 befestigt.

## Patentansprüche

1. Verfahren zur Montage eines Servoventils (1), bestehend aus einer Ausgangswelle (4), einer Eingangswelle (3) und einer Ventilhülse (5), in einer hydraulisch zentrierten Position, mit folgenden Schritten:
a) Bilden einer vormontierten Einheit aus Ausgangswelle (4) und Eingangswelle (3),
b) Einspannen der Ventilhülse (5) in einer drehbeweglichen aber in Axialrichtung fixierten Position,
c) Einsetzen der vormontierten Einheit in die Ventilhülse, wobei die vormontierte Einheit drehfest so positioniert ist, daß die Ventilhülse und die Ausgangswelle gegeneinander verdrehbar aneinanderliegen,
d) Beaufschlagen des vormontierten Servoventils mit Hydraulikdruck,
e) Zentrieren des Servoventils durch Verdrehen der Ventilhülse und
f) Befestigen der vormontierten Einheit mit der Ventilhülse,
**dadurch gekennzeichnet,**
daß beim Einsetzen der vormontierten Einheit diese axial beweglich positioniert ist und daß das Befestigen der vormontierten Einheit mit der Ventilhülse (5) durch Eindrücken in die Ventilhülse (5) geschieht, so daß die Ausgangswelle (4) und die Ventilhülse (5) im Überdeckungsbereich miteinander verpreßt sind.

2. Verfahren nach Anspruch 1, dadurch gekennzeichnet, daß die Ventilhülse (5) in einer exakt steuerbaren Verdrehvorrichtung (8) eingespannt wird.

3. Verfahren nach einem der vorhergehenden Ansprüche, dadurch gekennzeichnet, daß das Servoventil in einer hydraulisch dichten Kapsel mit Hydraulikdruck beaufschlagt wird.

4. Verfahren nach Anspruch 3, dadurch gekennzeichnet, daß die hydraulikdichte Kapsel durch die Einspannvorrichtungen (7,8,9) bei der Vormontage des Servoventils gebildet wird.

5. Verfahren nach einem der vorhergehenden Ansprüche, dadurch gekennzeichnet, daß die vormontierte Einheit (3,4) mittels Pressenkraft in die Ventilhülse (5) eingedrückt wird.

6. Verfahren nach einem der vorhergehenden Ansprüche, dadurch gekennzeichnet, daß bei der Bildung der vormontierten Einheit die Ausgangswelle (4) und die Eingangswelle (3) mit einem Torsionsstab (6) verbunden werden.

7. Vorrichtung zur Durchführung des Verfahrens nach wenigstens einem der Ansprüche 1 bis 6, bestehend aus
a) einer Haltebuchse (7) zur Aufnahme der Ventilhülse (5),
b) einen Einstellring (8) zum Aufsetzen auf die Haltebuchse (7) und zum Verdrehen der Ventilhülse (5),
c) eine Deckelbuchse (9) zur Führung der Ausgangswelle (4) und zum Aufsetzen auf den Einstellring (8) und
d) einen Stempel (10), der gegenüber der Deckelbuchse (9) drehstarr aber axial beweglich auf dieser aufsetzbar und mit der Ausgangswelle (4) verbindbar ist.

8. Vorrichtung nach Anspruch 7, dadurch gekennzeichnet, daß die Haltebuchse (7) eine Bohrung zur Aufnahme der Eingangswelle (3) aufweist.

9. Vorrichtung nach einem der Ansprüche 7 oder 8, dadurch gekennzeichnet, daR die Haltebuchse (7) eine Radialwellendichtung (16) aufweist.

10. Vorrichtung nach einem der Ansprüche 7 bis 9, dadurch gekennzeichnet, daß die Haltebuchse (7) Hydraulikbohrungen (11, 12, 13, 14) aufweist.

11. Vorrichtung nach einem der Ansprüche 7 bis 10, dadurch gekennzeichnet, daß der Einstellring (8) wenigstens einen Klemmnocken (39) zur verdrehstarren Verbindung mit der Ventilhülse (5) aufweist.

12. Vorrichtung nach Anspruch 11, dadurch gekennzeichnet, daß der wenigstens eine Klemmnocken (39) sekantenförmig ausgebildet ist.

13. Vorrichtung nach einem der Ansprüche 7 bis 12, dadurch gekennzeichnet, daß der Einstellring (8) eine Klemmschraube (31) aufweist.

14. Vorrichtung nach einem der Ansprüche 7 bis 13, dadurch gekennzeichnet, daß der Einstellring gegen eine Ringhülse verdrehbar gelagert ist.

15. Vorrichtung nach einem der Ansprüche 7 bis 14, dadurch gekennzeichnet, daß zur Verdrehung des Einstellringes (8) eine Spindel (33) angeordnet ist.

16. Vorrichtung nach Anspruch 15, dadurch gekennzeichnet, daß die Spindel mit einem Hebel (35) über ein Kugelgelenk (36) verbunden ist.

17. Vorrichtung nach einem der Ansprüche 7 bis 16, dadurch gekennzeichnet, daß zwischen dem Einstellring (8) und der Haltebuchse (7) eine O-Ringdichtung (19) angeordnet ist.

18. Vorrichtung nach einem der Ansprüche 7 bis 17, dadurch gekennzeichnet, daß die Deckelbuchse (9) eine Bohrung zur Aufnahme der Ausgangswelle (4) aufweist.

19. Vorrichtung nach einem der Ansprüche 7 bis 18, dadurch gekennzeichnet, daß zwischen der Deckelbuchse (9) und dem Einstellring (8) eine O-Ringdichtung (21) angeordnet ist.

20. Vorrichtung nach einem der Ansprüche 7 bis 19, dadurch gekennzeichnet, daß die Deckelbuchse (9) eine Radialwellendichtung (24) aufweist.

21. Vorrichtung nach einem der Ansprüche 7 bis 20, dadurch gekennzeichnet, daß zwischen dem Stempel (10) und der Deckelbuchse (9) eine Paßfeder zur drehstarren Verbindung angeordnet ist.

## Claims

1. Method of assembling a servo-valve (1), comprising an output shaft (4), an input shaft (3) and a valve sleeve (5), in a hydraulically centred position, having the following steps:
a) forming output shaft (4) and input shaft (3) into a preassembled unit,
b) clamping the valve sleeve (5) in a rotatable but axially fixed position,
c) inserting the preassembled unit into the valve sleeve, the preassembled unit being non-rotatably positioned in such a way that the valve sleeve and the output shaft lie adjacent so as to be twistable relative to one another,
d) pressurizing the preassembled servo-valve with hydraulic pressure,
e) centring the servo-valve by twisting the valve sleeve and
f) fastening the preassembled unit to the valve sleeve,
characterized in
that, during insertion of the preassembled unit, said unit is positioned so as to be axially movable and that fastening of the preassembled unit to the valve sleeve (5) is effected by pressing into the valve sleeve (5) so that the output shaft (4) and the valve sleeve (5) are pressed together in the overlap region.

2. Method according to claim 1, characterized in that the valve sleeve (5) is clamped in a precisely controllable twisting device (8).

3. Method according to one of the preceding claims, characterized in that the servo-valve is pressurized with hydraulic pressure in a hydraulically tight capsule.

4. Method according to claim 3, characterized in that the hydraulically tight capsule is formed by the clamping devices (7, 8, 9) during preassembly of the servo-valve.

5. Method according to one of the preceding claims, characterized in that the preassembled unit (3, 4) is pressed by the force of a press into the valve sleeve (5).

6. Method according to one of the preceding claims, characterized in that, during formation of the preassembled unit, the output shaft (4) and the input shaft (3) are connected to a torsion bar (6).

7. Device for effecting the method according to at least one of claims 1 to 6, comprising
a) a holding bush (7) for receiving the valve sleeve (5),
b) a setting ring (8) for mounting onto the holding bush (7) and for twisting the valve sleeve (5),
c) a cover bush (9) for guiding the output shaft (4) and for mounting onto the setting ring (8) and
d) a plunger (10), which is mountable on the cover bush (9) so as to be torsionally stiff but axially movable relative to the cover bush and is connectable to the output shaft (4).

8. Device according to claim 7, characterized in that the holding bush (7) has a bore for receiving the input shaft (3).

9. Device according to one of claims 7 or 8, characterized in that the holding bush (7) has a rotary shaft seal (16).

10. Device according to one of claims 7 to 9, characterized in that the holding bush (7) has hydraulic bores (11, 12, 13, 14).

11. Device according to one of claims 7 to 10, characterized in that the setting ring (8) has at least one clamping cam (39) for the torsionally stiff connection to the valve sleeve (5).

12. Device according to claim 11, characterized in that the at least one clamping cam (39) is secant-shaped.

13. Device according to one of claims 7 to 12, characterized in that the setting ring (8) has a clamping screw (31).

14. Device according to one of claims 7 to 13, characterized in that the setting ring is supported so as to be twistable relative to an annular sleeve.

15. Device according to one of claims 7 to 14, characterized in that a spindle (33) is provided for twisting the setting ring (8).

16. Device according to claim 15, characterized in that the spindle is connected by a spherical joint (36) to a lever (35).

17. Device according to one of claims 7 to 16, characterized in that an O-ring seal (19) is disposed between the setting ring (8) and the holding bush (7).

18. Device according to one of claims 7 to 17, characterized in that the cover bush (9) has a bore for receiving the output shaft (4).

19. Device according to one of claims 7 to 18, characterized in that an O-ring seal (21) is disposed between the cover bush (9) and the setting ring (8).

20. Device according to one of claims 7 to 19, characterized in that the cover bush (9) has a rotary shaft seal (24).

21. Device according to one of claims 7 to 20, characterized in that a featherkey is disposed between the plunger (10) and the cover bush (9) for the torsionally stiff connection.

## Revendications

1. Procédé de montage d'une servovalve (1), consistant en un arbre de sortie (4), un arbre d'entrée (3) et un manchon de valve (5), dans une position hydrauliquement centrée, avec les séquences suivantes:
a) formation d'un ensemble prémonté, se composant de l'arbre de sortie (4) et de l'arbre d'entrée (3),
b) montage du manchon de valve (5) dans une position mobile en rotation mais fixe axialement,
c) insertion de l'ensemble prémonté dans le manchon de la valve, l'ensemble prémonté étant mis en place sans pouvoir tourner, de telle façon que le manchon de la valve et l'arbre de sortie reposent l'un sur l'autre en pouvant tourner l'un contre l'autre,
d) application d'une pression hydraulique sur la servovalve prémontée,
e) centrage de la servovalve en faisant tourner le manchon de la valve et
f) fixation de l'ensemble prémonté au manchon de la valve,
caractérisé en ce que, lors de l'insertion de l'ensemble prémonté celui-ci est mis en place de façon mobile axialement et en ce que la fixation de l'ensemble prémonté au manchon de la valve (5) a lieu par enfoncement dans le manchon de la valve (5), de telle sorte que l'arbre de sortie (4) et le manchon de la valve (5) soient pressés l'un sur l'autre dans la zone de recouvrement.

2. Procédé selon la revendication 1, caractérisé en ce que le manchon de la valve (5) est monté dans un dispositif de rotation (8) que l'on peut exactement commander.

3. Procédé selon l'une des revendications précédentes, caractérisé en ce que la servovalve est alimentée par un fluide hydraulique sous pression dans une capsule hydrauliquement étanche.

4. Procédé selon la revendication 3, caractérisé en ce que la capsule hydrauliquement étanche est constituée par les dispositifs de montage (7, 8, 9) lors du prémontage de la servovalve.

5. Procédé selon l'une des revendications précédentes, caractérisé en ce que l'ensemble prémonté (3, 4) est enfoncé dans le manchon de la valve (5) au moyen d'une force de presse.

6. Procédé selon l'une des revendications précédentes, caractérisé en ce que lors de la formation de l'ensemble prémonté l'arbre de sortie (4) et l'arbre d'entrée (3) sont reliés par une barre de torsion (6).

7. Dispositif pour la mise en oeuvre du procédé selon l'une au moins des revendications 1 à 6, consistant en
a) une douille d'arrêt (7) servant à recevoir le manchon de la valve (5),
b) une bague de réglage (8) à poser sur la douille d'arrêt (7) et servant à faire tourner le manchon de la valve (5),
c) une douille de couverture (9) pour guider l'arbre de sortie (4) et à poser sur la bague de réglage (8) et
d) un poinçon (10), que l'on peut poser sur la douille de couverture (9) de façon solidaire en rotation, mais mobile axialement et que l'on peut réunir à l'arbre de sortie (4).

8. Dispositif selon la revendication 7, caractérisé en ce que la douille d'arrêt (7) présente un perçage pour recevoir l'arbre d'entrée (3).

9. Dispositif selon l'une des revendications 7 ou 8, caractérisé en ce que la douille d'arrêt (7) présente une garniture d'étanchéité d'arbre radiale (16).

10. Dispositif selon l'une des revendications 7 à 9, caractérisé en ce que la douille d'arrêt (7) présente des perçages hydrauliques (11, 12, 13, 14).

11. Dispositif selon l'une des revendications 7 à 10, caractérisé en ce que la bague de réglage (8) présente au moins une came de serrage (39) servant à la relier de façon solidaire en rotation au manchon de la valve (5).

12. Dispositif selon la revendication 11, caractérisé en ce que ladite au moins une came de serrage (39) est constituée en forme de sécante.

13. Dispositif selon l'une des revendications 7 à 12, caractérisé en ce que la bague de réglage (8) présente une vis de serrage (31).

14. Dispositif selon l'une des revendications 7 à 13, caractérisé en ce que la bague de réglage est montée de façon à pouvoir tourner par rapport à un manchon annulaire.

15. Dispositif selon l'une des revendications 7 à 14, caractérisé en ce que l'on dispose une broche (33) pour faire tourner la bague de réglage (8).

16. Dispositif selon la revendication 15, caractérisé en ce que la broche est reliée à un levier (35) au moyen d'un joint sphérique (36).

17. Dispositif selon l'une des revendications 7 à 16, caractérisé en ce que l'on dispose un joint d'étanchéité torique annulaire (19) entre la bague de réglage (8) et la douille d'arrêt (7).

18. Dispositif selon l'une des revendications 7 à 17, caractérisé en ce que la douille de couverture (9) présente un perçage pour recevoir l'arbre de sortie (4).

19. Dispositif selon l'une des revendications 7 à 18, caractérisé en ce qu'entre la douille de couverture (9) et la bague de réglage (8) on dispose un joint d'étanchéité torique annulaire (21).

20. Dispositif selon l'une des revendications 7 à 19, caractérisé en ce que la douille de couverture (9) présente un joint d'étanchéité d'arbre radial (24).

21. Dispositif selon l'une des revendications 7 à 20, caractérisé en ce qu'entre le poinçon (10) et la douille de couverture (9) on dispose une clavette parallèle servant à une liaison solidaire en rotation.
